# EUROPÄISCHE PATENTSCHRIFT

(11) **EP 0 844 473 B1**
(45) Veröffentlichungstag und Bekanntmachung des Hinweises auf die Patenterteilung: **03.01.2001**
(21) Anmeldenummer: 97117908.0
(22) Anmeldetag: 16.10.1997
(51) Int. Cl.: G01M 11/04, G02B 7/00, G12B 7/00

(54) **Optische Bank mit optischen Einheiten für die Raumfahrt**
Optical bench with optical units for space flights
Banc optique avec des unités optiques pour des voyages spatiaux

(30) Priorität: 25.11.1996 CH 289796
(43) Veröffentlichungstag der Anmeldung: 27.05.1998
(73) Patentinhaber: Contraves Space AG, 8052 Zürich (CH)
(72) Erfinder: Herren, Andreas, 8121 Benglen (CH); Sanvido, Saverio, 8152 Glattbrugg (CH)
(74) Vertreter: Hotz, Klaus, Dipl.-El.-Ing./ETH

(56) Entgegenhaltungen:
- WO-A-96/10204
- FR-A- 2 519 270
- US-A- 3 112 570

## Beschreibung

Die Erfindung betrifft eine optische Bank nach dem Oberbegriff des Patentanspruchs **1** sowie eine Verwendung der optischen Bank nach dem Oberbegriff des Patentanspruchs **9**.

Optische Bänke dieser Art werden zu verschiedenen Zwecken, unter anderem in Terminals von Fernmeldesatelliten, verwendet. Bei der Verarbeitung von Signalen in Form von Strahlen ist es von grundlegender Bedeutung, dass die Richtungen der Achsen der in der Bankstruktur aufgenommenen optischen Einheiten sich nicht verändern sondern stets beibehalten werden, und zwar unabhängig von Deformationen der Bankstruktur, beispielsweise infolge thermisch bedingter Deformationen. Bei der Verarbeitung von kollimierter Strahlung bedeutet dies, dass die Achsen der optischen Einheiten parallel bleiben müssen.

Innerhalb der optischen Einheiten ist, wenn deren Durchmesser nicht allzu gross ist und Materialien mit genügender Wärmeleitfähigkeit verwendet werden, die Temperatur im allgemeinen innerhalb eines Querschnittes hinreichend ausgeglichen, wogegen in axialer Richtung mit Temperaturgradienten und in der Folge mit einem entsprechenden Wärmefluss sowie mit entsprechenden Dilatationen zu rechnen ist. Da sich diese Dilatationen im wesentlichen auf die axiale Richtung der einzelnen optischen Einheiten beschränken, würden sie keine Veränderung der Achsrichtungen zur Folge haben, wenn die optischen Einheiten sich voneinander unabhängig dehnen und verkürzen könnten.

Bei bisher üblichen optischen Bänken wurde als Bankstruktur beispielsweise eine massive, sich quer zu den Achsen der optischen Einheiten erstreckende Platte, beispielsweise aus Glaskeramik, verwendet, in welcher die einzelnen optischen Einheiten annähernd mit ihrer gesamten Länge aufgenommen waren. Infolgedessen waren die optischen Einheiten gewissermassen über ihre Länge bzw. ihren in der Platte aufgenommenen Bereich miteinander verbunden und daher nicht frei, um unabhängig voneinander zu dilatieren. Infolge der beträchtlichen Plattendicke musste auch mit einem Temperaturgradienten über die Dicke der Platte gerechnet werden. Die gegenseitige Verbindung der optischen Geräte über eine beträchtliche Länge sowie das Vorhandensein eines Temperaturgradienten in der Platte selbst hatte eine Verbiegung der optischen Einheiten zur Folge, so dass die gegenseitig vorbestimmte, insbesondere parallele und konstante Richtung der Achsen der optischen Einheiten nicht hinreichend aufrechterhalten werden konnte. Weitere Nachteile dieser vorbekannten optischen Bänke sind darin zu sehen, dass sich unter den thermisch bedingten Deformationen Spannungen in der Platte selbst ergaben, und dass mindestens bei extraterrestrischen Verwendungen der optischen Bänke das hohe Plattengewicht nicht erwünscht war.

Zwar könnten die thermisch bedingten Verformungen klein gehalten werden, wenn Materialien mit minimalen Wärmedehnungskoeffizienten verwendet werden. Von solchen Materialien wird aber, insbesondere bei hohen Stückzahlen, aus preislichen Gründen im allgemeinen abgesehen. Ausserdem hat die Verwendung solcher spezieller Materialien eine gewisse Schnittstellenproblematik zur Folge, welche in der unterschiedlichen Wärmedilatation begründet ist.

Aus der **FR-A-2 519 270** ist sodann eine optische Bank bekannt, deren Bankstruktur im wesentlichen aus drei parallelen rechteckigen Platten besteht. Die erste und die zweite Platte sind durch ein versteifendes Wabengebilde zu einer Doppelplatte verbunden. Zwischen der Doppelplatte und der dritten Platte erstrecken sich Hülsen, welche als Aufnahmeteile für optische Geräte dienen. Die dritte Platte enthält in einem Raster verteilte Durchbrüche, von denen nach Bedarf eine gewisse Anzahl mit den genannten Hülsen versehen ist. Diese Anordnung weist mehrere Nachteile auf, insbesondere ist sie trotz der Rasterkonfiguration bezüglich der Aufnahmeteile selbst und damit bezüglich der Gestaltung der in den Aufnahmeteilen zu befestigenden optischen Einheiten nicht anpassbar, da alle Aufnahmeteile gleich ausgebildet sind. Durch ihre rechteckige Grundform erhält die optische Bank eine gewisse Masse und Ausdehnung, die in vielen Fällen gar nicht erforderlich ist. Anderseits sind zusätzliche Verstärkungen an möglicherweise hochbeanspruchten Stellen nicht möglich.

Die **Aufgabe** der Erfindung ist somit darin zu sehen,
- eine optische Bank der im Oberbegriff des Patentanspruchs **1** genannten Art zu schaffen, welche die genannten Nachteile nicht aufweist; und
- eine Verwendung der optischen Bank in einer speziellen Ausbildungsform vorzuschlagen.

Die **Lösung** dieser Aufgabe erfolgt erfindungsgemäss
- für die optische Bank durch die Merkmale des kennzeichnenden Teils des Patentanspruchs **1**, und
- für die Verwendung der optischen Bank durch die Merkmales des kennzeichnenden Teils des Anspruchs **9**.

Bevorzugte Weiterbildungen der erfindungsgemässen optischen Bank sind durch die anhängigen Patentansprüche **2** bis **8** definiert.

Die neue optische Bank ist demzufolge wie die optische Bank der **Fr-A-2 519 270** so konzipiert, dass in den zur Bankstruktur gehörenden Aufnahmeteilen für die optischen Einheiten die letzteren nur mit einem verhältnismässig kurzen Endbereich aufgenommen sind, während sie über ihre gesamte restliche Länge keine weitere gegenseitige Verbindung aufweisen, so dass sie einzeln quer von der Bankstruktur wegragen. Dadurch können die optischen Einheiten, ausgehend von den Aufnahmeteilen, unabhängig voneinander dilatieren, wodurch ihre Verbiegung weitgehend verhindert wird, so dass die parallele und unveränderte Richtung der Achsen nicht durch eine Verbiegung der optischen Einheiten bzw. ihrer Hülsen beeinträchtigt wird. Die Bankstruktur selbst ist so ausgelegt ist, dass sich Temperaturgradienten und damit Wärmeflüsse bzw. Wärmedilatationen nur innerhalb der Bankstruktur, d.h. in Richtung von deren Hauptausdehnung und somit quer zu den Achsen der optischen Einheiten, ergeben. Dadurch muss zwar ggfs. in Kauf genommen werden, dass die gegenseitigen Abstände der Achsen der optischen Einheiten sich geringfügig verändern, aber die Parallelität dieser Achsen bleibt erhalten. Das Ergebnis dieser Überlegungen ist die erfindungsgemässe optische Bank, deren Bankstruktur im wesentlichen durch die Aufnahmeteile verbindende Arme gebildet ist. Diese Ausbildung der optischen Bank bzw. der Bankstruktur ist besonders vorteilhaft, wenn die quer zur Bankstruktur gerichteten Querschnitte dieser Arme so dimensioniert sind, dass sie auch bei einer geringen Wandstärke und vorzugsweisen hohen Wärmeleitfähigkeit ein hohes Trägheitsmoment bezüglich ihrer parallel zur Bankstruktur verlaufenden Schwerachsen besitzen, da dadurch eine Biegung der Arme um diese Schwerachsen, die einen Verkippung der Achsen der optischen Einheiten zur Folge hätte, minimalisiert wird.

Die erfindungsgemäss vorgeschlagenen, die Aufnahmeteile für die optischen Einheiten verbindenden Arme können auch unter sich durch eine dünne, nahezu zweidimensionale Platte, vorzugsweise aus einem Material mit hoher Wärmeleitfähigkeit, verbunden sein bzw. in eine solche Platte integriert sein bzw. Teile einer solchen Platte bilden. Die die Aufnahmeteile verbindenden, in die Platte integrierten Arme können dabei eine Art plattenverstärkende Rippen bilden. Die Wandstärke einer solchen Platte liegt bei einer günstigen Ausbildungsform im Bereich von etwa 5 - 20 mm. Eine derartige Platte weist an jeder Stelle jeweils über ihre gesamte Dicke eine im wesentlichen gleiche Temperatur auf, so dass sich Temperaturgradienten, Wärmeflüsse und Dilatationen nur in der Plattenebene selbst ergeben, womit eine Verbiegung der Platte und eine Verkippung der optischen Einheiten vermieden wird.

Eine solche flache und damit leichte Bankstruktur kann zur weiteren Reduktion des Gewichtes an nicht oder wenig beanspruchten Bereichen Durchbrüche aufweisen oder gitterartig aufgebaut sein. Anderseits kann die Platte bei Bedarf die schon erwähnten, an den Stellen der Verbindungen der Aufnahmeteile verlaufenden, durch verstärkte Arme gebildeten verstärkenden Rippen sowie weitere Verstärkungsrippen besitzen.

Zur Befestigung der optischen Bank an weiteren konstruktiven Elementen können entsprechende Massnahmen getroffen werden. Beispielsweise kann die Bankstruktur Flansche aufweisen, die sich in ihrer Ebene erstrecken oder aus dieser Ebene abgekröpft sind. Bankstrukturen in Form von oder mit dünnen Platten können integrale Flansche aus dem Plattenmaterial besitzen, was eine einfache Herstellung durch spanlose Verformung ohne Schweiss-, Löt- oder Kleboperationen ermöglicht.

Als günstiges Material für die Bankstruktur, mit einer relativ hohen Wärmeleitfähigkeit, einem geringen spezifischen Gewicht, einer problemlosen Verarbeitung und einem verhältnismässig vorteilhaften Preis haben sich Aluminium bzw. geeignete Aluminiumlegierungen erwiesen.

Ein weiteres Problem, das insbesondere bei der Verwendung optischer Bänke im Weltraum auftritt, liegt in der hochenergetischen Strahlung, welcher die optischen Einheiten ausgesetzt sind. Eine besonders günstige Ausbildung der bisher beschriebenen optischen Bank weist daher eine Abschirmplatte auf, die vorteilhaft mindestens den Bereich der optischen Einheiten abdeckt und die sich zweckmässigerweise an der den optischen Einheiten entgegengesetzten Seite der Bankstruktur befindet.

Das eben erwähnte Problem der Beeinträchtigung von optischen Einheiten durch hochenergetische Strahlungen tritt selbstverständlich bei allen optischen Bänken, also nicht nur bei den bisher beschriebenen optischen Bänken, auf.

Damit eine solche Strahlungsabschirmplatte nicht die richtungsmässig festgelegte, ggfs. parallele Anordnung der Achsen der optischen Einheiten beeinträchtigt, muss sie so befestigt werden, dass bei, etwa thermisch bedingter, Verkippung aus der Plattenebene die gegenseitige Winkellage der optischen Einheiten und die Richtung ihrer Achsen relativ zur Bankstruktur möglichst erhalten bleiben. Zwar sind einstellbare gegenseitige Befestigungen von verschiedenen Platten aus der **WO-96/10204** bekannt; die dort erwähnten Befestigungen sind aber nicht elastisch - mit Ausnahme natürlich der stets vorhandenen Elastizität der Materialien an und für sich - sondern ergeben eine zwar einstellbare aber fixierte Verbindung.

Um die Strahlungsabschirmplatte in der erwünschten Weise an der Bankstruktur zu befestigen, muss sich zwischen der Strahlungsabschirmplatte und der Bankstruktur ein nachgiebiges Element befinden. Beispielsweise kann die Strahlungsabschirmplatte einem Abstand von der Bankstruktur angeordnet sein, der mindestens der maximal zu erwartenden Deformation oder Verkippung der Strahlungsabschirmplatte in Richtung zur Bankstruktur hin entspricht, und es wird eine nachgiebige, ggfs. elastische Befestigung der Strahlungsabschirmplatte vorgesehen.

Eine geeignete gegenseitige Befestigung von Bankstruktur und Strahlungsabschirmplatte kann auch in der stellenweisen Verwendung einer elastischem Klebemasse bestehen, wie zum Beispiel Silikon, durch welches eine gewisse Scherung aufgenommen werden kann.

Besonders vorteilhaft ist es, wenn an der Strahlungsabschirmplatte angeordnete weitere optische Einheiten, insbesondere für kollimierte zusammenfallende ein- und ausgehende Lichtstrahlen, so angeordnet sind, dass bei einer Verkippung der Abschirmplatte eine Autokorrektur eintritt, durch welche das Zusammenfallen des eingehenden Strahls mit dem ausgehenden Strahl erhalten bleibt.

Wie schon mehrfach erwähnt, sind die erfindungsgemässen optischen Bänke für Verwendungszwecke im Zusammenhang mit kollimiertem Licht besonders geeignet. Eine besondere Verwendung finden sie als Bestandteile von Fernmeldesatelliten im Weltraum, wo sich spezielle Probleme ergeben. Unter anderem ist - im Gegensatz zu zahlreichen terrestrischen Verwendungen - nicht nur mit einer statischen sondern mit einer dynamischen Belastung zu rechnen, und zweitens treten während der Startphase der Trägerrakete spürbar andere Belastungen auf als im späteren Gebrauch.

Bei der Dimensionierung der einzelnen Bauteile der optischen Bank und ihrer Verbindungen sind demzufolge die dynamischen Belastungen beim Gebrauch sowie die während der Startphase der Trägerrakete auftretenden Belastungen zu berücksichtigen.

Die bereits erwähnte sowie weitere Aspekte der Erfindung werden im folgenden anhand eines Ausführungsbeispiels einer optischen Bank und mit Bezug auf die Zeichnung ausführlich beschrieben. Es zeigt
- **Fig. 1**: eine optische Bank, in einem Schaubild, wobei die mit den optischen Einheiten bestückte Seite der Bankstruktur sichtbar ist; und
- **Fig.2**: die in Fig. 1 dargestellte optische Bank, ebenfalls in einem Schaubild, wobei die den optischen Geräten abgewandte Seite der Bankstruktur sichtbar ist.

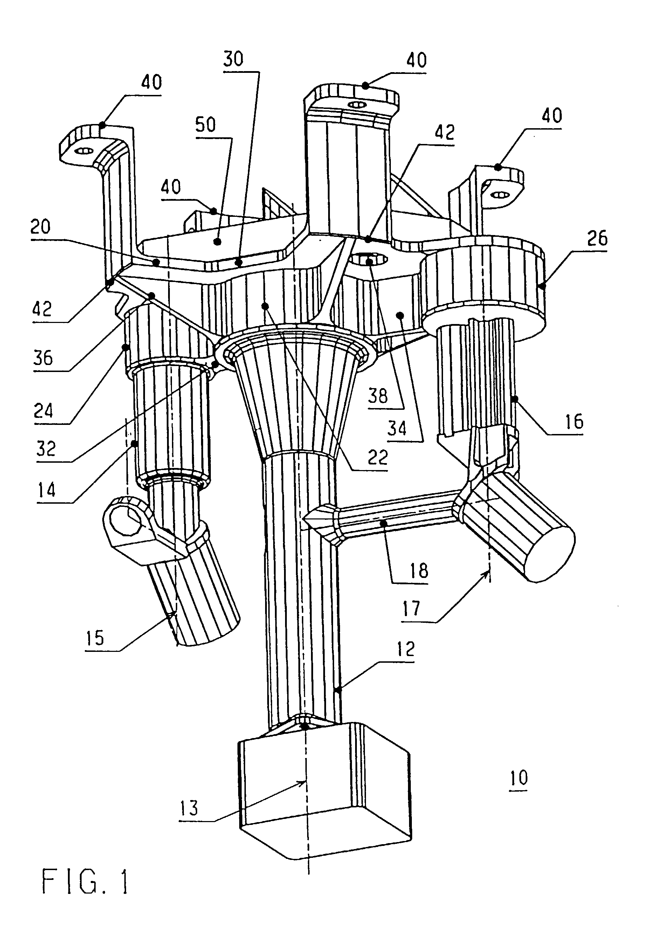

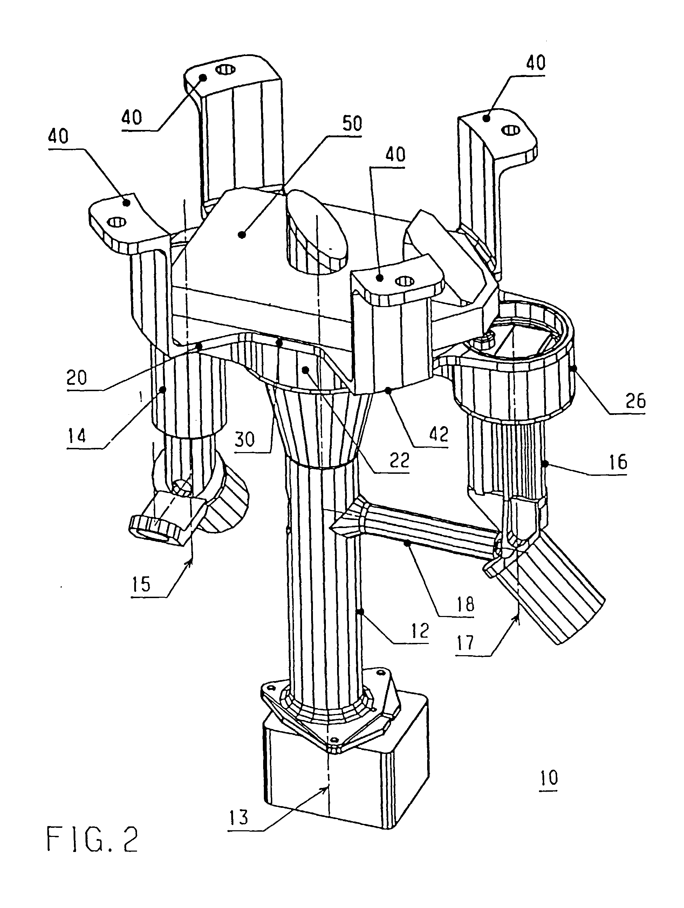

Die in den **Fig. 1** und **2** dargestellte optische Bank **10** weist drei optische Einheiten **12**, **14, 16** auf sowie eine Bankstruktur **20** auf.

Jede der optischen Einheiten **12, 14, 16** ist mit einem Endbereich - der in den **Fig. 1** und 2 oben liegt - in einem Aufnahmeteil **22** bzw. **24** bzw. **26** der Bankstruktur **20** aufgenommen, wobei die Achsen **13, 15, 17** der optischen Einheiten **12** bzw. **14** bzw. **16** parallel gerichtet sind, so dass sich die optische Bank **10** zur Verarbeitung von kollimierter Strahlung eignet. Die drei optischen Einheiten **12, 14, 16** sind nur über ihre Aufnahmeteile **22, 24, 26** und die Bankstruktur **20** verbunden, während sie mit ihren freien - in Fig. **1** und **2** unten liegenden - Enden unabhängig voneinander von der Bankstruktur **20** weg ragen. Um Missverständnissen vorzubeugen, wird speziell darauf hingewiesen, dass der abgewinkelte Teil **18** der optischen Einheit **12** frei endet und mit der optischen Einheit **16** mechanisch nicht verbunden ist.

Die Bankstruktur **20** weist, wie schon erwähnt, die Aufnahmeteile **22, 24, 26** auf. Diese sind an einer dünnen Platte **30** angeordnet, welche sich quer zu den Achsen **13, 15, 17** erstreckt.

Zwischen den Aufnahmeteilen **22, 24** bzw. **22,26** verlaufen von der Platte **30** abstehende Rippen **32** bzw. **34** mit über ihre Länge gleichbleibenden Querschnitten, welche gewissermassen die Aufnahmeteile **22, 24** bzw. **22, 26** verbindende Arme darstellen. Im weiteren ist die Platte **30** durch mehrere Rippen **36** verstärkt, die mit sich verjüngendem Querschnitt von den Aufnahmeteilen **22, 24, 26** zum Rand der eigentlichen Platte **30** verlaufen. Schliesslich enthält die Platte **30** Ausnehmungen, von welchen nur eine Ausnehmung als Durchbruch **38** dargestellt ist.

In Fig. **2** ist zu erkennen, dass die Platte **30** und damit die Bankstruktur **20** vier integrale, abgekröpfte Flansche **40** besitzt, mittels welchen die optische Bank **10** andernorts befestigbar ist. Die schon erwähnten verstärkenden Rippen **36** sind so angeordnet, dass sie am Rand des ebenen Bereichs der Bankstruktur **20** in der Mitte der Ansatzlinie **42** der Flansche **40** enden.

Ebenfalls aus Fig. **2** ist ersichtlich, dass an der den optischen Einheiten **12, 14, 16** entgegengesetzten Seite der Platte **30** eine zur Platte **30** parallele und damit zu den Achsen **13, 15, 17** orthogonale Strahlungsabschirmplatte **50** angeordnet ist, welche den Bereich der optischen Einheiten **12, 14, 16** abdeckt und diese vor hochenergetischen Strahlen abschirmt.

## Patentansprüche

1. Optische Bank (**10**), mit einer Bankstruktur (**20**) und mit mindestens zwei in der Bankstruktur (**20**) befestigten optischen Einheiten (**12, 14, 16**) mit Achsen (**13, 15, 17**), die unter sich und relativ zur Bankstruktur bestimmten Winkellagen einnehmen, wobei jede optische Einheit (**12, 14, 16**) mit ihrem einen Endbereich in einem an der Bankstruktur (20) angeordneten Aufnahmeteil (**22, 24, 26**) befestigt ist und mit ihrem restlichen Bereich im wesentlichen quer von der Bankstruktur (**20**) wegragt,
**dadurch gekennzeichnet,**
dass die Bankstruktur (**20**) mindestens einen in Verbindung der Aufnahmeteile (**22,24; 22,26**) angeordneten Arm (**32, 34**) besitzt, or so ausgebildet und angeordnet ist, dass bei einer Wärmedilatation die Aufnahmeteile (**22, 24, 26**) ohne Verkippung quer zur den Achsen (**13, 15, 17**) verschiebbar sind, wobei sich die Parallelität und Richtung der Achsen (13, 15, 17) nicht verändert.

2. Optische Bank (**10**) nach Patentanspruch **1**,
**dadurch gekennzeichnet,**
dass die die Aufnahmeteile verbindenden Arme (**32, 34**) der Bankstruktur (**20**) in einer sich quer zu den Achsen (**13, 15, 17**) erstreckenden dünnen Platte (**30**) aus einem Material mit hoher Wärmerleitfähigkeit integriert sind, die unter thermischer Einwirkung verbiegungsfrei in Plattenhauptrichtung dilatiert.

3. Optische Bank (**10**) nach Patentanspruch **2**,
**dadurch gekennzeichnet,**
dass die Platte (**30**) mit verstärkenden Rippen (**36**) und/oder mit Ausnehmungen (**38**) versehen ist.

4. Optische Bank (**10**) nach einem der vorangehenden Patentansprüche,
**dadurch gekennzeichnet,**
dass auf der den optischen Einheiten (**12, 14, 16**) abgewandten Seite der Bankstruktur (**20**) eine den Bereich der optischen Einheiten (**12, 14, 16**) abdeckende Strahlungsabschirmplatte (**50**) angeordnet ist.

5. Optische (**10**) Bank nach Patentanspruch **4**,
**dadurch gekennzeichnet,**
dass die Strahlungsabschirmplatte (**50**) nachgiebig an der Bankstruktur (**20**) befestigt ist, um bei einer Verkippung und/oder Deformation der Strahlungsabschirmplatte (**50**) eine Änderung der Richtung der Achsen (**13, 15, 17**) der optischen Einheiten (**12, 14, 16**) zu verhindern.

6. Optische Bank (**10**) nach Patentanspruch **4** oder **5**,
**dadurch gekennzeichnet,**
dass an der Strahlungsabschirmplatte (50) auf ihrer der Bankstruktur (**20**) abgewandten Seite mindestens eine weitere optische Einheit (**18**) für einen einfallenden und einen ausfallenden Strahl, die in einer Geraden zusammenfallen, so angeordnet ist, dass bei einer Verkippung der Abschirmplatte (**50**) aus ihrer Plattenebene das Zusammenfallen des einfallenden mit dem ausfallenden Strahl erhalten bleibt.

7. Optische Bank (**10**) nach einem der vorangehenden Patentansprüche,
**dadurch gekennzeichnet,**
dass die Bankstruktur (**20**) vorzugsweise integrale Flansche (**40**) zur Befestigung der optischen Bank (**10**) aufweist.

8. Optische Bank (**10**) nach einem der vorangehenden Patentansprüche,
**dadurch gekennzeichnet,**
dass die Achsen (**13, 15, 17**) der optischen Einheiten (**12, 14, 16**) parallel und vorzugsweise senkrecht zur Bankstruktur (**20**) gerichtet sind.

9. Verwendung einer optischen Bank (**10**) nach einem der vorangehenden Patentansprüche in einem Fernmeldesatelliten, der zur Beförderung in den Weltraum mittels einer Trägerrakete vorgesehen ist,
**dadurch gekennzeichnet,**
dass die Bankstruktur (**20**) auf dynamische Belastung und auf die während der Startphase der Trägerrakete wirkende Belastung dimensioniert ist.

## Claims

1. An optical bench (**10**) with a bench structure (**20**) and with at least two optical units (**12**, **14, 16**) fastened in the bench structure (**20**), with axes (**13, 15, 17**), which take up defined angular positions in respect to each other and relative to the bench structure, wherein the end area of each optical unit (**12, 14, 16**) is fastened in a receiving element (**22, 24, 26**) disposed on the bench structure (**20**) and with its remaining area essentially projects transversely away from the bench (**20**),
characterized in that
the bench structure (**20**) has at least one arm (**32, 34**) arranged for connecting the receiving elements (**22, 24; 22, 26**), which is embodied and arranged in such a way that, in case of heat dilatation, the receiving elements (**22, 24, 26**) can be displaced transversely in respect to the axes (**13, 15, 17**) without tilting, wherein the parallelism and orientation of the axes (**13, 15, 17**) is not changed.

2. The optical bench (**10**) in accordance with claim 1,
characterized in that
the arms (**32, 34**) of the bench structure (**20**) which connect the receiving elements are integrated into a thin plate (**30**) extending transversely in respect to the axes (**13, 15, 17**), which is made of a material with a high degree of heat conductivity, and by the effects of heat is dilated without bending in the main direction of the plate.

3. The optical bench (**10**) in accordance with claim 2,
characterized in that
the plate (**30**) is provided with reinforcing ribs (**36**) and/or with cutouts (**38**).

4. The optical bench (**10**) in accordance with one of the preceding claims,
characterized in that
a radiation shielding plate (**50**) is arranged on the side of the bench structure (**20**) facing away from the optical units (**12, 14, 16**), which covers the area of the optical units (**12, 14, 16**).

5. The optical bench (**10**) in accordance with claim **4**,
characterized in that
the radiation shielding plate (**50**) is resiliently fastened on the bench structure (**20**) in order to prevent a change in the orientation of the axes (**13, 15, 17**) of the optical units (**12**, **14, 16**) in case of tilting and/or deformation of the radiation shielding plate (**50**).

6. The optical bench (**10**) in accordance with claim **4** or **5**,
characterized in that
on the side of the shielding plate (**50**) facing away from the bench structure (**20**) a further optical unit (**18**) for an incoming and an outgoing beam (**18**), which coincide in a straight line, is arranged in such a way that, when the shielding plate **50** is tilted out of the plane of its plate, the coincidence of the incoming with the outgoing beam is maintained.

7. The optical bench (**10**) in accordance with one of the preceding claims,
characterized in that
the bench structure (**20**) preferably has integrated flanges (**40**) for fastening the optical bench (**10**).

8. The optical bench (**10**) in accordance with one of the preceding claims,
characterized in that
the axes (**13, 15, 17**) of the optical units (**12, 14, 16**) are oriented parallel and preferably perpendicularly in respect to the bench structure (**20**).

9. Use of an optical bench (**10**) in accordance with one of the preceding claims in a telecommunications satellite, which is intended to be conveyed into space by means of a launch rocket,
characterized in that
the size of the bench structure (**20**) is designed for dynamic loads and for the loads encountered during the start phase of the launch rocket.

## Revendications

1. Banc optique (**10**) présentant une structure de banc (**20**) et au moins deux unités optiques (**12, 14, 16**) fixées dans la structure de banc (**20**) et présentant des axes (**13, 15, 17**) qui prennent des positions angulaires déterminées entre elles et par rapport à la structure de banc, chaque unité optique (**12, 14, 16**) étant fixée par une de ses zones d'extrémité dans une pièce réceptrice (**22, 24, 26**) disposée sur la structure de banc (**20**) et faisant saillie par sa zone restante essentiellement transversalement à la structure de banc (**20**)
caractérisé en ce que
la structure de banc (**20**) possède au moins un bras (**32, 34**) disposé en liaison avec les pièces de réception (**22, 24 ; 22, 26**), lequel est conçu et disposé de façon telle que, lors d'une dilatation thermique, les pièces de réception (**22, 24, 26**) peuvent être déplacées sans basculement transversalement aux axes (**13, 15, 17**), le parallélisme et l'orientation des axes (**13, 15, 17**) n'étant alors pas modifiés.

2. Banc optique (**10**) selon la revendication **1**,
caractérisé en ce que
les bras (**32, 34**) de la structure de banc (**20**) reliant les pièces de réception sont intégrés dans une plaque mince (**30**) s'étendant transversalement aux axes (**13, 15, 17**) et réalisée dans un matériau présentant une conductibilité thermique élevée, qui se dilate sans déformation dans la direction principale de la plaque sous une action thermique.

3. Banc optique (**10**) selon la revendication **2**,
caractérisé en ce que
la plaque (**30**) est équipée de nervures de renforcement (**36**) et/ou d'évidements (**38**).

4. Banc optique (**10**) selon l'une des revendications précédentes,
caractérisé en ce que
sur la face de la structure de banc (**20**) opposée aux unités optiques (**12, 14, 16**) est disposée une plaque de protection anti-rayonnement (**50**) couvrant la zone des unités optiques (**12, 14, 16**).

5. Banc optique (**10**) selon la revendication **4**,
caractérisé en ce que
la plaque de protection anti-rayonnement (**50**) est fixée de façon flexible à la structure de banc (**20**) pour empêcher, lors d'un basculement et/ou d'une déformation de la plaque de protection anti-rayonnement (**50**), une modification de l'orientation des axes (**13, 15, 17**) des unités optiques (**12, 14, 16**).

6. Banc optique (**10**) selon la revendication **4** ou **5**,
caractérisé en ce que
au niveau de la plaque de protection anti-rayonnement (**50**), sur la face opposée à la structure de banc (**20**) est disposée au moins une autre unité optique (**18**) pour un rayonnement entrant et sortant coïncidant en une droite, de façon telle que, lors d'un basculement de la plaque anti-rayonnement (**50**) de son plan de plaque, la coïncidence du rayonnement entrant avec le rayonnement sortant reste maintenue.

7. Banc optique (**10**) selon l'une des revendications précédentes,
caractérisé en ce que
la structure de banc (**20**) présente de préférence des brides intégrales (**40**) destinées à fixer le banc optique (**10**).

8. Banc optique (**10**) selon l'une des revendications précédentes,
caractérisé en ce que
les axes (**13, 15, 17**) des unités optiques (**12, 14, 16**) sont orientés parallèlement et de préférence perpendiculairement à la structure de banc (**20**).

9. Utilisation d'un banc optique (**10**) selon l'une des revendications précédentes dans un satellite de télécommunications qui est prévu pour réaliser des voyages spatiaux au moyen d'un lanceur,
caractérisée en ce que
la structure de banc (**20**) est dimensionnée en fonction de la charge dynamique et en fonction de la charge agissant pendant la phase de lancement du lanceur.
